# EUROPÄISCHE PATENTSCHRIFT

(11) **EP 1 319 542 B1**
(45) Veröffentlichungstag und Bekanntmachung des Hinweises auf die Patenterteilung: **08.12.2004**
(21) Anmeldenummer: 02466004.5
(22) Anmeldetag: 11.12.2002
(51) Int. Cl.: B60H 1/00, B60N 3/10

(54) **Vorrichtung zur Befestigung einer Kühlbox in einem Personenkraftwagen**
Device for the fixation of a cooling box within a passenger car
Dispositif de fixation d'un boîte de refroidissement à l'intérieur d'une voiture

(30) Priorität: 12.12.2001 CZ 20014454
(43) Veröffentlichungstag der Anmeldung: 18.06.2003
(73) Patentinhaber: Skoda Auto a.s., 293 60 Mlada Boleslav (CZ)
(72) Erfinder: Kucera, Viktor, 747 14 Ludgerovice (CZ)

(56) Entgegenhaltungen:
- DE-A- 4 102 646
- DE-C- 19 724 119
- DE-C- 19 800 104
- US-A- 2 525 952
- US-A- 4 637 222

## Beschreibung

Die Erfindung betrifft eine Vorrichtung zur Befestigung einer Kühlbox für das Kühlen von Lebensmitteln und Getränken, die im Gepäckraum an den Rücksitzen so angebracht ist, damit ihr Inhalt vom Platz der Rücksitze durch eine Öffnung hinter der klappbaren Armlehne dieser Sitze erreichbar wäre.

Gegenwärtig wird bei Personenkraftwagen, wo zwischen der Wand der Rücksitze und der Wand des Gepäckraums an der Stelle hinter der klappbaren Armlehne ein Raum für die Unterbringung einer Kühlbox entsteht, eine vierkantige Spannlagerung verwendet, dargestellt in DE 41 02 646 C2, in der die Kühlbox eingeschoben und befestigt ist. Diese Spannlagerung kann jedoch nicht bei Personenkraftwagen verwendet werden, wo die Rücksitze nur eine Trennwand vom Gepäckraum abtrennt.
Bei diesen Autos wird deshalb zur Anbringung und Befestigung des Kühlaggregats an die Trennwand des Gepäckraums hinter der klappbaren Armlehne, wie in DE 35 44 491 C1 beschrieben ist, eine an der Konsole angebrachte, feste Schraubverbindung verwendet, die fest mit der Trennwand verbunden ist, wobei als eigentliche Kühlbox ein direkt in der Armlehne angebrachter Kasten dient. Der Nachteil der gegebenen Lösung ist , dass bei einer Nichtverwendung der Kühlbox das Kühlaggregat durch seine Unterbringung und der festen Verbindung die volle Nutzung des Gepäckraums verhindert und dass die Kühlbox und das Kühlaggregat zwei eigenständige Teile sind, was bedeutet, dass das Kühlaggregat bei der Nichtnutzung des in der Armlehne als Kühlbox untergebrachten Kastens als unnötigte Anlage erscheint.

Die oben angeführten Unzulänglichkeiten beseitigt bis zu einem gewissen Maß die Vorrichtung zur Befestigung einer Kühlbox in einem Personenkraftwagen, die als herausnehmbare Befestigung konstruiert ist, das bedeutet, dass die Kühlbox ohne eine Verwendung von Instrumenten und Werkzeug herausgenommen und eingesetzt werden kann. Diese Vorrichtung zur Befestigung einer Kühlbox in einem Personenkraftwagen erfordert keine weitere tragende Spannlagerung, denn die Konstruktion der Befestigung bewirkt, dass das Gewicht der Kühlbox sowie alle aus diesem Gewicht bei der Fahrt des Fahrzeugs entstehenden Kräfte allein die Trennwand zwischen den Rücksitzen und dem Gepäckraum trägt.

Das Wesen der Erfindung besteht darin, dass in der vierkantigen Öffnung in der Trennwand an der Stelle hinter der klappbaren Armlehne der Rücksitze hinter den Rücksitzen der vordere Rahmen und aus dem Gepäckraum der hintere Rahmen befestigt ist, der in seinem oberen Teil mindestens einen oberen Gegenhaken zum Einhaken der Kühlbox hat, wobei beide Rahmen untereinander mit Schrauben verbunden sind. Die Kühlbox hat oberhalb und unterhalb der Zugangstür mindestens einen oberen Haken und unterhalb der Zugangstür ist mindestens ein unterer Haken angebracht, wobei der Auffangteil des unteren Hakens größer als der des oberen Hakens ist, damit ein Ein- und Aushaken im oberen Teil der Kühlbox ermöglicht wird, ohne dass der untere Haken ausgehakt wird. Unter dem hinteren Rahmen ist an der Trennwand ein unterer Gegenhaken mit einer Schraube befestigt. Die Länge zwischen dem oberen Haken und dem unteren Haken der Kühlbox ist größer als die Länge zwischen dem oberen Gegenhaken und dem unteren Gegenhaken, und zwar aus dem Grund, dass der untere Haken die Schwerkraft der Kühlbox und die auf diese Fassung in vertikaler Richtung wirkenden Kräfte auf den unteren Gegenhaken überträgen kann und der obere Haken die Belastung der Kühlbox in horizontaler Richtung auf den oberen Gegenhaken überträgen kann.
Das Prinzip der Fassung besteht darin, dass die Kühlbox im Gepäckraum am unteren Haken in den unteren Gegenhaken, anschließend dann am oberen Haken in den oberen Gegenhaken eingehakt wird und den zwischen dem oberen Haken der Kühlbox und der unteren Fläche des oberen Teils des hinteren Rahmens entstandenen Raum dichtet von der Seite der Rücksitze ein Ausdichtungsstück aus, das im vorderen Rahmen geführt wird, damit es nicht zu einem Aushaken und zu einem Herausfallen der Kühlbox kommen kann.

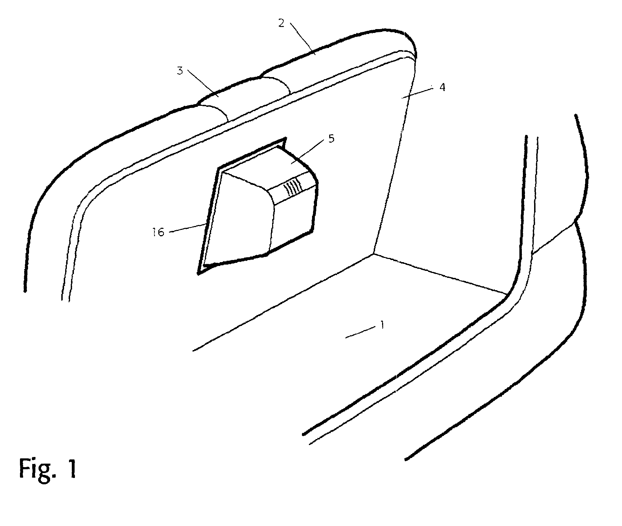

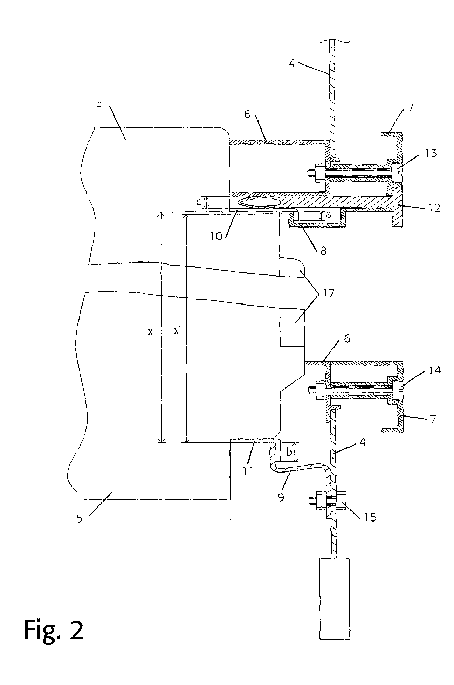

Die Erfindung wird näher mit Hilfe von Zeichnungen erklärt, auf denen Fig. 1 die axonometrische Sicht in den Gepäckraum des Personenkraftwagens auf die Unterbringung der Kühlbox veranschaulicht, Fig. 2 demonstriert den Schnitt der Befestigung der Kühlbox in einem Personenkraftwagen.

Die Vorrichtung zur Befestigung einer Kühlbox 5 in einem Personenkraftwagen, die gemäß Abb. 1 in Richtung Gepäckraum 1 des Personenkraftwagens in einer vierkantigen Öffnung 16 befestigt wird, die sich in der Trennwand 4 zwischen dem Gepäckraum 1 und den Rücksitzen 2 hinter der klappbaren Armlehne 3 so befindet, dass ihr Inhalt von der Stelle der Rücksitze 2 aus durch die Öffnung 16 hinter der klappbare Armlehne 3 der Rücksitze 2 erreichbar wäre, setzt sich gemäß Abb. 2 aus dem vorderen Rahmen 7, der hinter den Rücksitzen 2 in der vierkantigen Öffnung 16 in der Trennwand 4 hinter der klappbaren Armlehne 3 der Rücksitze 2 des Personenkraftwagens befestigt ist; dem hinteren Rahmen 6, der in Richtung vom Gepäckraum 1 in der vierkantigen Öffnung 16 in der Trennwand 4 befestigt ist; dem unteren Gegenhaken 9, der unterhalb der vierkantigen Öffnung 16 an der Trennwand 4 befestigt und mit dieser Trennwand 4 mit einem tragenden Befestigungselement 15 verbunden ist; dem Ausdichtungsstück 12, das von der Seite der Rücksitze 2 im hinteren Rahmen 7 geführt ist und zwischen den hinteren Rahmen 6 und den oberen Haken 10 fällt, der im oberen Teil, oberhalb der Zugangstür 17 der Kühlbox 5 befestigt ist, zusammen. Der vordere Rahmen 7 und der hintere Rahmen 6 sind untereinander oben mindestens mit einem oberen Befestigungselement 13 und unten mindestens mit einem unteren Befestigungselement 14 verbunden. Der hintere Rahmen 6 hat in seinem oberen Teil mindestens einen oberen Gegenhaken 8 zum Einhaken der Kühlbox 5. Die Kühlbox 5 hat außer dem oberen Haken 10 in ihrem vorderen, unteren Teil unterhalb der Zugangstür 17 der Kühlbox 5 mindestens einen unteren Haken 11 befestigt.

Die eigentliche Installation besteht im Einhaken der Kühlbox 5 im Gepäckraum 1 am unteren Haken 11 in den Gegenhaken 9, anschließend dann am oberen Haken 10 in den oberen Gegenhaken 8, wobei der Auffangteil b des unteren Hakens 11 größer ist, als der Auffangteil a des oberen Hakens 10, damit ein Ein- und Aushaken des oberen Hakens 10 der Kühlbox 5 möglich ist, ohne dass der untere Haken 11 der Kühlbox 5 ausgehakt wird. In die zwischen dem oberen Haken 10 der Kühlbox 5 und dem hinteren Rahmen 6 entstandene Lücke c ist von der Seite der Rücksitze 2 ein Ausdichtungsstück 12 eingeschoben, das im vorderen Rahmen 7 geführt wird, damit es nicht zu einem Aushaken und Herausfallen der Kühlbox 5 kommen kann.

Die Lücke c ist kleiner als der Auffangteil b des unteren Hakens 11 aus dem Grund, dass es bei der Installation der Kühlbox 5 im Moment, wo der untere Haken 11 im unteren Gegenhaken 9 eingehakt ist und das Ausdichtungsstück 12 noch nicht zwischen den hinteren Rahmen 6 und den oberen Haken 10 geschoben ist, beim Abheben der Kühlbox 5 nicht zu einem Aushaken des unteren Hakens 11 der Kühlbox 5 kommt.

Die Lücke c ist größer als der Auffangteil a des oberen Hakens 10, damit es möglich wäre, den oberen Haken 10 der Kühlbox 5 am oberen Gegenhaken 8 des hinteren Rahmens 6 einzuschieben und einzuhaken.

Die Länge x, die durch die Entfernung zwischen dem oberen Haken 10 und dem unteren Haken 11 der Kühlbox 5 gegeben ist, ist größer als die Länge x', die durch die Entfernung zwischen dem oberen Gegenhaken 8 und dem unteren Gegenhaken 9 gegeben ist, woraus hervorgeht, dass mit der Schwerkraft der Kühlbox 5 sowie mit den auf diese Fassung in vertikaler Richtung wirkenden Kräfte der untere Gegenhaken 9 belastet ist.

Die Deinstallation der Kühlbox 5 erfolgt dergestalt, dass von der Stelle der Rücksitze 2 aus die klappbare Armlehne 3 der Rücksitze 2 umgeklappt wird und das Ausdichtungsstück 12 aus der zwischen dem oberen Haken 10 der Kühlbox 5 und dem hinteren Rahmen 6 entstandenen Lücke heraus geschoben wird. Von der Stelle der Rücksitze 2 aus wird die Kühlbox 5 nach dem Öffnen der Zugangstür 17 abgehoben und zunächst der obere Haken 10 aus dem oberen Gegenhaken 8 ausgehakt, die Kühlbox 5 wird in den Gepäckraum 1 geklappt und anschließend wird der untere Haken 11 aus dem unteren Gegenhaken 9 ausgehakt.

## Patentansprüche

1. Die Vorrichtung zur Befestigung einer Kühlbox (5) in einem Personenkraftwagen in einer vierkantigen Öffnung (16), die sich in der Trennwand (4) zwischen dem Gepäckraum (1) und den Rücksitzen (2) hinter der klappbaren Armlehne (3) befindet, **dadurch gekennzeichnet, dass** hinter den Rücksitzen (2) an der Trennwand (4) ein vorderer Rahmen (7) und aus dem Gepäckraum (1) ein hinterer Rahmen (6) befestigt ist, der in seinem oberen Teil mindestens einen oberen Gegenhaken (8) zum Einhaken der Kühlbox (5) hat, wobei unterhalb des hinteren Rahmens (6) an der Trennwand (4) durch ein tragendes Befestigungselement (15) mindestens ein unterer Gegenhaken (9) befestigt ist und im vorderen Rahmen (7) wird ein Ausdichtungsstück (12) geführt, das die Lücke (c) zwischen dem oberen Haken (10) der Kühlbox (5) und dem hinteren Rahmen (6) ausdichtet.

2. Die Vorrichtung zur Befestigung einer Kühlbox in einem Personenkraftwagen, **dadurch gekennzeichnet, dass** oberhalb der Zugangstür (17) der Kühlbox (5) mindestens ein oberer Haken (10) angebracht ist und unterhalb der Zugangstür (17) der Kühlbox (5) mindestens ein unterer Haken (11) angebracht ist, wobei der Auffangteil (b) des unteren Hakens (11) größer ist, als der Auffangteil (a) des oberen Hakens (10).

3. Die Vorrichtung zur Befestigung einer Kühlbox gemäß Anspruch 1, **dadurch gekennzeichnet, dass** der vordere Rahmen (7) und der hintere Rahmen (6) in ihren oberen Teilen untereinander mindestens mit einem oberen Befestigungselement (13) und in ihren unteren Teilen mindestens mit einem unteren Befestigungselement (14) verbunden sind.

4. Die Vorrichtung zur Befestigung einer Kühlbox gemäß den Ansprüchen 1 und 2, **dadurch gekennzeichnet, dass** der Auffangteil (a) des oberen Hakens (10) kleiner ist, als die Lücke (c ).

5. Die Vorrichtung zur Befestigung einer Kühlbox gemäß den Ansprüchen 1 und 2, **dadurch gekennzeichnet, dass** der Auffangteil (b) des unteren Hakens (11) größer ist, als die Lücke (c ).

6. Die Vorrichtung zur Befestigung einer Kühlbox gemäß den Ansprüchen 1 und 2, **dadurch gekennzeichnet, dass** die Länge (x) zwischen dem oberen Haken (10) und dem unteren Haken (11) der Kühlbox (5) größer ist, als die Länge (x') zwischen dem oberen Gegenhaken (8) und dem unteren Gegenhaken (9).

## Claims

1. The equipment for fixture of cold box (5) in a car in a four-square opening (16) that is in the partition panel (4) between the boot (1) and the rear seats (2) behind the folding elbow rest (3) **characterised in that** a front frame (7) is attached to partition panel (4) behind the rear seats (2) and a rear frame (6) is attached from the boot side (1), where the rear frame (6) has at least one upper counter hook (8) for hooking up the cold box (5), whereby at least one lower counter hook (9) is attached to the partition (4) under the rear frame (6) using a load-bearing clamping element (15) and in the front frame (7), a packing piece (12) is inserted that fills the gap (c) between the upper hook (10) of the cold box (5) and the rear frame (6).

2. The equipment for fixture of cold box in a car **characterised in that** at least one upper hook (10) is arranged above the door (17) of the cold box (5) and at least one lower hook (11) is arranged below the door (17) of the cold box (5) whereby the catch part (b) of the lower hook (11) is larger than the catch part (a) of the upper hook (10).

3. The equipment for fixture of cold box as claimed in claim 1 **characterised in that** the front frame (7) and rear frame (6) in their upper sections are mutually linked by at least one upper attachment element (13) and at least one attachment element (14) in their lower parts.

4. The equipment for fixture of the cold box as claimed in claim 1 and 2 **characterised in that** the catch part (a) of the upper hook (10) is smaller than the gap (c).

5. The equipment for fixture of the cold box as claimed in claim 1 and 2 **characterised in that** the catch part (b) of the lower hook (11) is smaller than the gap (c).

6. The equipment for fixture of the cold box as claimed in claim 1 and 2 **characterised in that** the distance (x) between the upper hook (10) and the lower hook (11) of the cold box (5) is greater than the distance (x') between the upper counter hook (8) and the lower counter hook (9).

## Revendications

1. Installation servant à la fixation d'un frigo-box (5) dans une voiture, dans un orifice carré (16) se trouvant dans la cloison (4) située entre le coffre (1) et les sièges arrières (2), derrière l'appuie-coude inclinable (3) **caractérisée en ce que** derrière les sièges arrières (2), sur la cloison séparatrice (4), est fixé le cadre avant (7) et, du côté du coffre (1), le cadre arrière (6) qui, dans sa partie supérieure possède au moins un contre-crochet supérieur (8) servant à accrocher le frigo-box (5). Sous le cadre arrière (6), sur la cloison séparatrice (4), au moins un contre-crochet inférieur (9) est fixé par un élément de fixation porteur (15) et, dans le cadre avant (7), se trouve la pièce d'étanchéité (12) qui étanchéise l'espace (c) se trouvant entre le crochet supérieur (10) du frigo-box (5) et le cadre arrière (6).

2. Installation servant à la fixation d'un frigo-box dans une voiture **caractérisée en ce que** au-dessus de la porte d'entrée (17) du frigo-box (5) se trouve au moins un crochet supérieur (10) et que sous la porte d'entrée (17) du frigo-box (5) se trouve au moins un crochet inférieur (11) en sachant que la partie d'appui (b) du crochet inférieur (11) est plus grande que la partie d'appui (a) du crochet supérieur (10).

3. Installation servant à la fixation d'un frigo-box en fonction de la revendication 1 **caractérisée en ce que** le cadre avant (7) et le cadre arrière (6) sont raccordés dans leurs parties supérieures et ce, par au moins un élément supérieur de fixation (13) et, dans leurs parties inférieures, par au moins un élément inférieur de fixation (14).

4. Installation servant à la fixation d'un frigo-box en fonction des revendications 1 et 2 **caractérisée en ce que** la partie d'appui (a) du crochet supérieur 10) est plus petite que l'espace (c ).

5. Installation servant à la fixation d'un frigo-box en fonction des revendications 1 et 2 **caractérisée en ce que** la partie d'appui (b) du crochet inférieur (11) est plus grande que l'espace (c ).

6. Installation servant à la fixation d'un frigo-box en fonction des revendications 1 et 2 **caractérisée en ce que** la longueur (x) entre le crochet supérieur (10) et le crochet inférieur (11) du frigo-box (5) est supérieure à la longueur (x') entre le contre-crochet supérieur (8) et le contre-crochet inférieur (9).
